# EUROPÄISCHE PATENTANMELDUNG

(11) **EP 1 889 536 A1**
(43) Veröffentlichungstag der Anmeldung: **20.02.2008**
(21) Anmeldenummer: 06017109.7
(22) Anmeldetag: 17.08.2006
(51) Int. Cl.: A01G 9/10

(54) **Pflanzgefäss**

(71) Anmelder: Butz, Agnes u. Eberhard, 65232 Taunusstein (DE)
(72) Erfinder: Butz, Agnes u. Eberhard, 65232 Taunusstein (DE)
(74) Vertreter: Schwenk, Norbert

(57) **Zusammenfassung**

Die vorliegende Erfindung betrifft ein Pflanzgefäß, welches einen Pflanztopf aufweist, der an der Seite (2) und gegebenenfalls am Boden (1) durchtrennt ist.

Das Pflanzgefäß der vorliegenden Erfindung eignet sich ausgezeichnet zum Umpflanzen von Pflanzen, insbesondere von großen oder schweren Pflanzen. Die Gefahr der Verletzung von Pflanzen wird reduziert und das Pflanzgefäß kann nach dem Umpflanzen erneut verwendet werden.

## Beschreibung

Die vorliegende Erfindung bezieht sich auf ein neues Pflanzgefäß sowie ein Verfahren zum Umpflanzen von Pflanzen unter Verwendung des Pflanzgefäßes.

Pflanzgefäße wie Blumentöpfe sind allgemein bekannt und werden in der Regel aus keramischen Materialien (z.B. Tonen wie Terrakotta) oder aus Kunststoff oder Metall hergestellt. Pflanzgefäße werden im gewerblichen wie auch im privaten Bereich verwendet, z.B. in der Anzucht und im Gartenbau von Terrassen- und Zimmerpflanzen. Der Durchmesser der Pflanzgefäße kann dabei je nach Anwendungsgebiet variieren und bis einen Meter und mehr betragen.

Unbefriedigend bei den bekannten Pflanzgefäßen ist, dass die Pflanzen oft nur sehr schwer aus den Pflanzgefäßen entnommen werden können, z.B. aufgrund starker Verwurzelung. Dies ist beim Umpflanzen sehr nachteilig, insbesondere bei großen oder schweren Pflanzen, und birgt die Gefahr der Verletzung der Pflanzen.

Die Aufgabe der vorliegenden Erfindung bestand somit darin, ein Pflanzgefäß zur Verfügung zu stellen, welches die bekannten Nachteile vermeidet und insbesondere ein einfaches und sicheres Umpflanzen von Pflanzen ermöglicht.

Diese Aufgabe wird erfindungsgemäß durch ein spezielles Pflanzgefäß gelöst, welches einen Pflanztopf aufweist, der an der Seite (2) und gegebenenfalls am Boden (1) durchtrennt ist.

Der Pflanztopf des erfindungsgemäßen Pflanzgefäßes ist an der Seite (2) und gegebenenfalls zusätzlich am Boden (1) durchtrennt, so dass der Pflanztopf geöffnet werden kann, z.B. durch Auseinanderklappen oder Auseinandernehmen seiner aufgrund der Durchtrennung vorliegenden Teile, beispielsweise um das Herausnehmen von Pflanzen aus dem Pflanzgefäß zu erleichtern. Unter dem Begriff "durchtrennt" ist im Rahmen der vorliegenden Beschreibung zu verstehen, dass die jeweilig durchtrennte Fläche des Pflanztopfes, z.B. die Seitenfläche oder der Boden, entlang einer in der durchtrennten Fläche verlaufenden Trennungslinie durchtrennt ist. Trennungslinie(n) der Seitenflächen verlaufen in der Vertikalen, d.h. in der Ebene der Seitenflächen, vom unteren Rand zum oberen Rand der Seitenfläche, Trennungslinie(n) des Bodens verlaufen in der Horizontalen, d.h. in der Ebene des Bodens, vom einen Rand des Bodens bis zum gegenüberliegenden Rand.

An den Trennungslinien kann der Pflanztopf durch Haltevorrichtungen (4, 4') (z.B. durch Klammern, Verschlüsse) zusammengehalten werden (auch ohne dass dies in dieser Beschreibung jeweils erwähnt ist), die zum Öffnen (z.B. durch Auseinanderklappen oder Auseinandernehmen der Pflanztopfteile, z.B. der Pflanztopfhälften oder Pflanztopfviertel) entfernt oder geöffnet werden können.

Damit der Pflanztopf geöffnet werden kann, ist er im allgemeinen an mindestens zwei Flächen durchtrennt, z.B. an zwei (vorzugsweise einander gegenüberliegenden) Stellen an den Seitenflächen oder an einer Stelle an den Seitenflächen und einmal am Boden.

Der Pflanztopf kann an den Seitenflächen durch die Trennungslinien z.B. an zwei oder mehr (z.B. an drei, vier oder mehr) Stellen durchtrennt sein, so dass zwei, drei, vier oder mehr Pflanztopfteile vorliegen, die beim Öffnen auseinandergeklappt oder auseinandergenommen werden. Zudem kann der Pflanztopf optional am Boden ein- oder mehrfach (z.B. zweifach, dreifach, vierfach oder mehrfach) durchtrennt sein, z.B. einfach durchtrennt durch eine den Boden in zwei Hälften teilende Trennungslinie oder zweifach durchtrennt durch zwei rechtwinklig zueinander verlaufende Trennungslinien, durch die der Boden in vier Viertel geteilt ist.

Der Pflanztopf kann an den Seitenflächen durch die Trennungslinien auch an einer oder mehr (z.B. zwei, drei, vier oder mehr) Stellen durchtrennt sein, und zudem am Boden einfach oder mehrfach (z.B. zweifach, dreifach, vierfach oder mehrfach) durchtrennt sein, z.B. einfach durchtrennt durch eine den Boden in zwei Hälften teilende Trennungslinie oder zweifach durchtrennt durch zwei rechtwinklig zueinander verlaufende Trennungslinien, durch die der Boden in vier Viertel geteilt ist.

Weist der Pflanztopf insgesamt mehr als zwei Trennungslinien auf (z.B. drei, vier oder mehr Trennungslinien), so kann der Pflanztopf an einer oder mehr der über die Anzahl von zwei hinausgehenden Trennungslinien durch Scharniere (3) zusammengehalten werden. So kann der Pflanztopf z.B. an drei Flächen durchtrennt sein, z.B. an zwei (vorzugsweise einander gegenüberliegenden) Stellen der Seitenflächen und einmal am Boden (z.B. durch eine Trennungslinie, welche die beiden Trennungslinien der Seitenflächen miteinander verbindet), und entweder an einer der beiden Trennungslinien der Seitenflächen oder an der Trennungslinie des Bodens durch Scharniere zusammengehalten werden.

Bevorzugt ist der Pflanztopf
a) an zwei oder mehr (vorzugsweise einander gegenüberliegenden) Stellen an den Seitenflächen durchtrennt (2a, 2a') und zusätzlich ein- oder mehrfach am Boden durchtrennt (1a) (Variante A), oder
b) an zwei oder mehr (vorzugsweise einander gegenüberliegenden) Stellen an den Seitenflächen durchtrennt (2a, 2a'), und am Boden entweder nicht durchtrennt oder am Boden durchtrennt (1a) und dort durch Scharniere (3) zusammengehalten (Variante B), oder
c) an einer Stelle an den Seitenflächen durchtrennt (2a) und zusätzlich einmal am Boden durchtrennt (1a), wobei optional die Seitenflächen gegenüber der ersten Trennungslinie (2a) ein zweites Mal durchtrennt sind (2a') und dort durch Scharniere (3) zusammengehalten werden (Variante C).

In einer bevorzugten Ausführungsform der Variante A ist der Pflanztopf einfach oder zweifach am Boden durchtrennt sowie in Fortführung der Trennungslinie(n) des Bodens an den zwei bzw. vier jeweils einander gegenüberliegenden Seitenflächen ebenfalls durchtrennt (Variante A1), so dass der Pflanztopf in zwei Hälften bzw. vier Viertel geteilt ist, durch deren Auseinandernehmen das Pflanzgefäß geöffnet werden kann. Besonders bevorzugt ist der Pflanztopf in zwei Hälften geteilt.

In einer bevorzugten Ausführungsform der Variante B ist der Pflanztopf am Boden (1) nicht durchtrennt, jedoch an zumindest zwei Stellen an den Seitenflächen (2a, 2a') - bevorzugt an zwei oder vier einander einander gegenüberliegenden Stellen an den Seitenflächen - durchtrennt (Variante B1), so dass der Pflanztopf an den Seiten in der Vertikale auseinandergeklappt werden kann - wobei der Pflanztopf durch den nicht durchtrennten Boden zusammengehalten wird - und die Pflanze nach oben aus dem Pflanzgefäß entnommen werden kann. Besonders bevorzugt ist der Pflanztopf dabei an zwei einander gegenüberliegenden Stellen an den Seitenflächen durchtrennt, so dass zwei auseinanderklappbare Hälften vorliegen.

In einer alternativen Ausführungsform der Variante B ist der Boden in Fortführung der Trennungslinien der Seitenflächen ebenfalls durchtrennt und durch eines oder mehr Scharniere (3) zusammengehalten (Variante B2). Hierdurch kann das Auseinanderklappen der Pflanztopfteile (vorzugsweise der Pflanztopfhälften oder Pflanztopfviertel) erleichtert werden, was insbesondere bei großen oder schweren Pflanzen vorteilhaft sein kann.

In einer bevorzugten Ausführungsform der Variante C ist der Pflanztopf durch eine Trennungslinie einmal am Boden (1) durchtrennt sowie in Fortführung der Trennungslinie des Bodens (1a) an einer Stelle an den Seitenflächen (2a) durchtrennt (Variante C1), so dass der Pflanztopf in der Horizontale auseinandergeklappt werden kann - wobei der Pflanztopf durch die nicht durchtrennten Seitenflächen (2) zusammengehalten wird - und die Pflanze entweder nach oben oder auch seitlich entnommen werden kann oder nach unten entnommen werden kann und z. B. direkt in ein anderes darunter befindliches Pflanzgefäß oder in den Boden eingepflanzt werden kann. Dies kann insbesondere bei großen oder schweren Pflanzen vorteilhaft sein.

In einer alternativen Ausführungsform der Variante C ist die der durchtrennten Stelle der Seitenfläche (2a) gegenüberliegende Stelle der Seitenfläche (2a') in Fortführung der Trennungslinie des Bodens (1a) ebenfalls durchtrennt und durch eines oder mehr Scharniere (3) zusammengehalten (Variante C2). Hierdurch kann das Auseinanderklappen der Pflanztopfteile erleichtert werden, was insbesondere bei großen oder schweren Pflanzen vorteilhaft sein kann.

Der Pflanztopf kann aus handelsüblichen Materialien für Pflanzgefäße bestehen wie keramischem Material (z.B. Ton wie Terrakotta), Kunststoff (z.B. Polyolefine wie Polyethylen oder Polypropylen), Metall welches beschichtet sein kann (z.B. Eisen, Aluminium, Zink oder Legierungen auf Basis dieser Metalle) oder organischem Material (z.B. Korb, Bast, Kokos oder Bambus), er kann die Form bekannter Pflanztöpfe aufweisen, z.B. rund oder eckig (z.B. viereckig) und die Größe bekannter Pflanztöpfe aufweisen. Bevorzugt besteht der Pflanztopf aus Kunststoff, insbesondere aus Polyolefinen wie Polyethylen oder Polypropylen, besonders bevorzugt aus Polypropylen.

Der Pflanztopf des erfindungsgemäßen Pflanzgefäßes kann rundum geschlossen sein oder Öffnungen (5) aufweisen. Öffnungen können sich z.B. am Boden des Pflanztopfes befinden, z.B. um das Ablaufen von Wasser zu ermöglichen, und/oder an der Seite des Pflanztopfes befinden und z.B. ein Gitter bilden, so dass die Pflanzenwurzeln nach außen wachsen und Nährstoffe und Wasser aufnehmen können.

Der Pflanztopf des erfindungsgemäßen Pflanzgefäßes weist bevorzugt Griffe auf, besonders bevorzugt mindestens zwei Griffe (6, 6'). Der Pflanztopf kann auch mehr als zwei Griffe, z.B. drei, vier oder mehr Griffe aufweisen, was insbesondere beim Umpflanzen von großen oder schweren Pflanzen von Vorteil sein kann. Bevorzugt ist eine gerade Anzahl von Griffen, insbesondere zwei oder vier Griffe, die bevorzugt an einander gegenüberliegenden Seiten des Pflanztopfes angebracht sind.

Die Griffe des erfindungsgemäßen Pflanzgefäßes können mit dem Pflanztopf starr oder flexibel verbunden sein. Bevorzugt sind die Griffe mit dem Pflanztopf flexibel verbunden, so dass sie z.B. versenkt oder umgeklappt werden können oder zum Herausnehmen der Pflanzen an den Pflanztopf angebracht werden können (z.B. durch Einstecken oder Einhaken in dafür vorgesehene Öffnungen im oberen Teil des Pflanztopfes) und anschließend wieder entfernt werden können. An den an der Seite durchtrennten Stellen des Pflanztopfes können die Griffe auch als Klammern dienen, welche die Seitenflächen zusammenhalten. In einer bevorzugten Ausführungsform sind die Griffe flexibel mit dem Pflanztopf verbunden und können z.B. im oberen Rand des Pflanztopfes versenkt werden oder umgeklappt werden.

Die Griffe ermöglichen beispielsweise ein einfaches Anheben und Herausnehmen des Pflanzgefäßes aus einem etwaig vorhandenen Übertopf. Die Griffe können jede zweckmäßige Form aufweisen, die ein Anheben des Pflanztopfes ermöglicht und aus dem gleichen Material wie der Pflanztopf oder aus einem anderen Material bestehen. Bevorzugt bestehen die Griffe aus Kunststoff (z.B. Polyolefine wie Polyethylen oder Polypropylen), Metall welches beschichtet sein kann (z.B. Eisen, Aluminium, Zink oder Legierungen auf Basis dieser Metalle) oder organischem Material (z.B. Korb, Bast, Kokos oder Bambus) oder aus keramischem Material (z.B. Ton wie Terrakotta). Besonders bevorzugt bestehen die Griffe aus Kunststoff (vorzugsweise Polypropylen), aus organischem Material oder aus Metall, was insbesondere bei großen oder schweren Pflanzen geeignet ist.

Für Außenbepflanzungen in Keramiktöpfen, z.B. in Tontöpfen wie Terracotta-Töpfen, ist es bevorzugt, wenn das erfindungsgemäße Pflanzgefäß als Innentopf verwendet wird und Öffnungen aufweist (insbesondere an den Seiten), welche vorzugsweise ein Gitter bilden. Hierdurch können die Pflanzenwurzeln auf Wasser zugreifen, welches in den Keramiktöpfen (Außentöpfen) gespeichert sein kann.

Für Zimmerpflanzen ist es bevorzugt, wenn das erfindungsgemäße Pflanzgefäß an der Seite geschlossen ist und am Boden Öffnungen zum Wasserablauf aufweist.

Um das Herausnehmen von Pflanzen aus einem Pflanztopf (z.B. einem handelsüblichen Pflanztopf oder einem erfindungsgemäß durchtrennten Pflanztopf) zu erleichtern, kann es insbesondere bei großen oder schweren Pflanzen vorteilhaft sein, wenn der Pflanztopf mit mindestens einem, z. B. einem, zwei oder mehr Tragebändern (7) von innen ausgelegt ist. In einer bevorzugten Ausführungsform ist der Pflanztopf mit einem oder mit zwei Tragebändern ausgelegt. Insbesondere bei besonders schweren Pflanzen können auch mehr als zwei Tragebänder verwendet werden.

Sofern zwei oder mehr Tragebänder verwendet werden, befinden sich diese bevorzugt im wesentlichen gleichwinklig zueinander, bei zwei Tragebändern z.B. im wesentlichen rechtwinklig. Sofern zwei oder mehr Tragebänder verwendet werden, können diese an ihren Kreuzungspunkten, insbesondere im Bereich der Pflanztopfmitte, miteinander verbunden sein, z. B. durch Vernähen oder Vernieten.

Die Tragebänder verlaufen im allgemeinen vom oberen Pflanztopfrand entlang der Innenseite der sich an den Pflanztopfrand anschließenden Seitenfläche des Pflanztopfes über den Boden des Pflanztopfes entlang der Innenseite der gegenüberliegenden Seitenfläche des Pflanztopfes zum gegenüberliegenden oberen Pflanztopfrand und weisen an ihren Enden bevorzugt je eine Haltevorrichtung (8) (z.B. einen Griff) auf. Besonders einfach lässt sich ein Griff realisieren, indem an den Enden der Tragebänder das Bandmaterial je eine Grifföffnung aufweist, erhältlich z. B. durch Ausschneiden oder Ausstanzen des Bandmaterials. Alternativ kann der Griff auch als separates Teil an dem Trageband angebracht sein. Die Pflanze kann - durch die Tragebänder gehalten - besonders leicht aus dem Pflanztopf genommen werden. Hierdurch werden insbesondere bei großen oder schweren Pflanzen Beschädigungen vermieden.

An den Pflanztopfrändern können die Tragebänder befestigt sein, z.B. indem sie unter einen versenkbaren Griff geklemmt werden oder mit einer Lochöffnung über einen am Topfrand befindlichen, sich zum Topfrand verjüngenden, Zapfen geführt werden.

Die Dimensionierung (Breite, Dicke) und das Material der Tragebänder hängt z.B. vom Gewicht der Pflanztopfinhalts (im allgemeinen Pflanze und Nährmedium wie Pflanzenerde) ab. Die Breite der Tragebänder hängt zudem vom Durchmesser des Pflanztopfes ab und liegt im allgemeinen im Bereich von 10% bis 100% des Topfdurchmessers, vorzugsweise im Bereich von 15% bis 50% des Topfdurchmessers. Die Dicke der Tragebänder hängt insbesondere von deren Material sowie vom Gewicht des aus dem Pflanztopf herauszunehmenden Inhalts ab und beträgt im allgemeinen weniger als 1 cm, insbesondere weniger als 0,5 cm.

Die Tragebänder können aus jedem Material bestehen, welches sich zu Bändern verarbeiten lässt und unter dem Gewicht des Pflanztopfinhalts nicht zerreißt, vorzugsweise aus Kunststoff (z.B. Polyolefine wie Polyethylen oder Polypropylen) oder aus organischem Material (z.B. Korb, Bast, Kokos oder Bambus). Bevorzugt bestehen die Tragebänder aus bei Umgebungstemperatur (insb. bei Raumtemperatur) flexiblem Material, welches sich der Form des Pflanztopfes anpassen lässt. So ist es möglich, den Pflanztopf vor dem Einpflanzen der Pflanzen mit den Tragebändern auszulegen. Anschließend können die Pflanzen eingepflanzt und bei Bedarf mit Hilfe der Tragebänder angehoben oder vollständig aus dem Pflanztopf entnommen werden.

Gegenstand der vorliegenden Erfindung ist weiterhin ein Verfahren zum Umpflanzen (z.B. zum Umtopfen) von Pflanzen unter Verwendung eines erfindungsgemäßen Pflanzgefäßes.

In einer Ausführungsform des erfindungsgemäßen Verfahrens (Variante V-A) können die Pflanzen a) in einem erfindungsgemäßen Pflanzgefäß, welches vorzugsweise mit Griffen versehen ist, aus einem Übertopf entnommen werden und anschließend b) in einen neuen Übertopf eingesetzt werden. Dabei kann das Pflanzgefäß, wenn es mit Griffen versehen ist besonders leicht aus dem alten Übertopf entnommen werden und in einen neuen Übertopf eingesetzt werden.

In einer anderen Ausführungsform des Verfahrens (Variante V-B) können die Pflanzen a) in einem erfindungsgemäßen Pflanzgefäß einem Übertopf entnommen werden, anschließend b) dem Pflanzgefäß entnommen werden und c) wieder eingesetzt werden, z.B. in ein anderes (z.B. ein größeres) erfindungsgemäßes oder handelsübliches Pflanzgefäß und optional anschließend in einen Übertopf, oder direkt in die Erde. Sofern sich das erfindungsgemäße Pflanzgefäß vor dem Umpflanzen nicht in einem Übertopf befindet kann Schritt a) entfallen.

Bei Verfahrensvariante V-B ist es vorteilhaft, wenn der Pflanztopf des Pflanzgefäßes von innen mit Tragebändern ausgelegt ist, welche z.B. in Schritt b) das Herausnehmen der Pflanze aus dem Pflanzgefäß noch weiter erleichtern können, insbesondere bei großen oder schweren Pflanzen.

Bei Verfahrensvariante V-B kann in Schritt b) die Pflanze aus einem zu öffnenden Pflanzgefäß leicht und zerstörungsfrei entnommen und anschließend wieder eingesetzt werden. Da auch das Pflanzgefäß unbeschadet bleibt, kann dieses erneut bepflanzt werden.

Das Pflanzgefäß der vorliegenden Erfindung eignet sich somit ausgezeichnet zum Umpflanzen von Pflanzen, insbesondere von großen oder schweren Pflanzen. Die Gefahr der Verletzung von Pflanzen wird reduziert und das Pflanzgefäß kann nach dem Umpflanzen erneut verwendet werden.

Die vorliegende Erfindung wird durch die nachfolgenden Figuren anhand einiger bevorzugter Ausführungsformen veranschaulicht, ohne dass diese in irgendeiner Weise limitierenden Charakter haben.

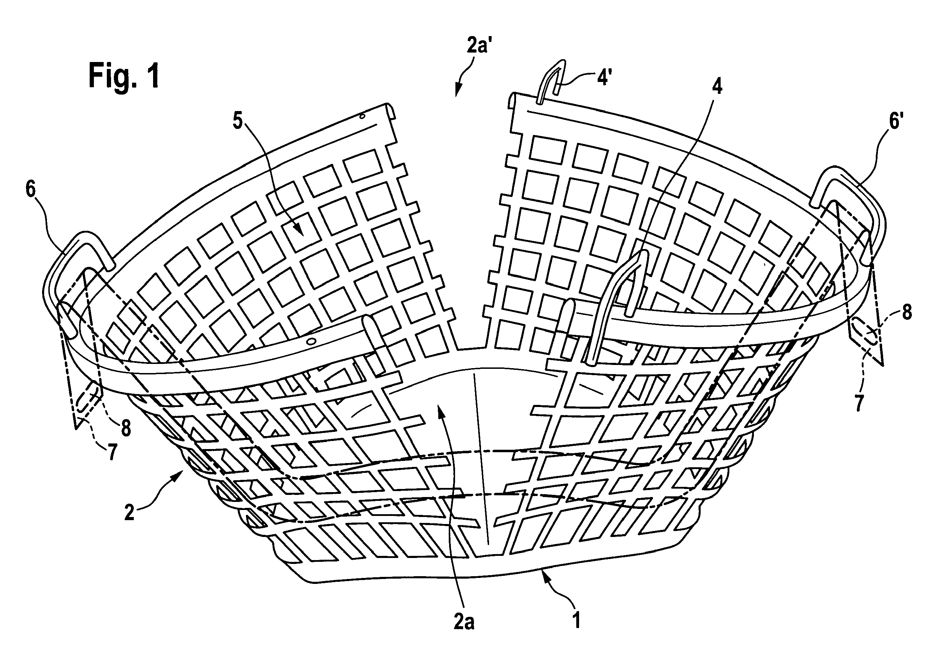

- Figur 1:: Pflanzgefäß der Variante B1: Pflanztopf an der Seite zweifach (2a, 2a') durchtrennt, mit optional einlegbarem Trageband (7)

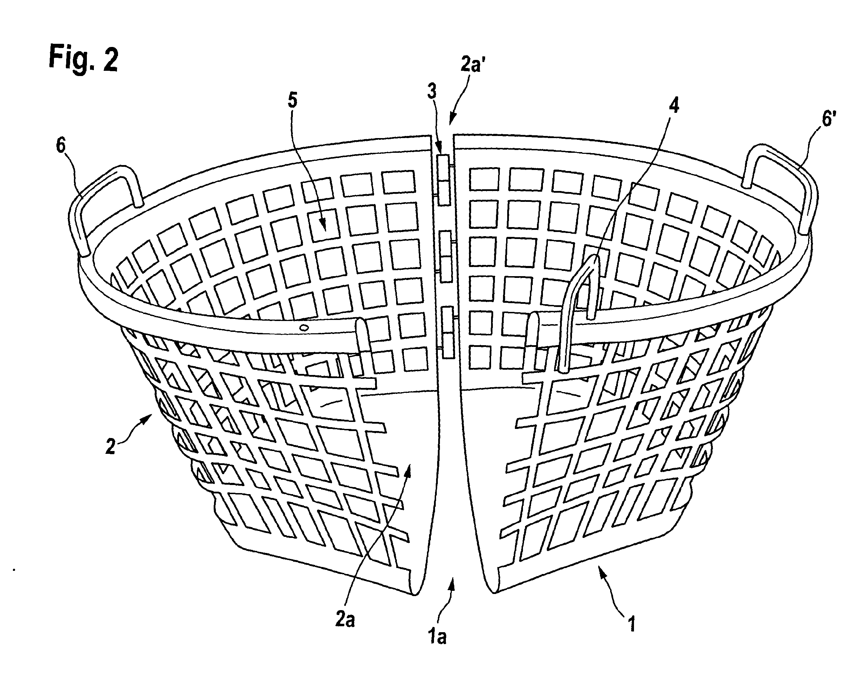

- Figur 2:: Pflanzgefäß der Variante C2: Pflanztopf an der Seite zweifach (2a, 2a') und am Boden einfach (1 a) durchtrennt, wobei die Seitenfläche an der zweiten Trennungslinie (2a') mit Scharnieren (3) zusammengehalten wird

## Patentansprüche

**1.** Pflanzgefäß, welches einen Pflanztopf aufweist, der an der Seite (2) und gegebenenfalls am Boden (1) durchtrennt ist.

**2.** Pflanzgefäß gemäß Anspruch 1, wobei der Pflanztopf an mindestens zwei Flächen durchtrennt ist.

**2.** Pflanzgefäß gemäß Anspruch 1 oder 2, wobei der Pflanztopf
a) an zwei oder mehr Stellen an den Seitenflächen durchtrennt ist (2a, 2a') und zusätzlich ein- oder mehrfach am Boden durchtrennt ist (1a), oder
b) an zwei oder mehr Stellen an den Seitenflächen durchtrennt ist (2a, 2a') und am Boden entweder nicht durchtrennt ist oder am Boden durchtrennt ist (1a) und dort durch Scharniere (3) zusammengehalten wird, oder
c) an einer Stelle an den Seitenflächen durchtrennt ist (2a) und zusätzlich einmal am Boden durchtrennt ist (1a), wobei optional die Seitenflächen gegenüber der ersten Trennungslinie (2a) ein zweites Mal durchtrennt sind (2a') und dort durch Scharniere (3) zusammengehalten werden.

**4.** Pflanzgefäß gemäß einem oder mehreren der Ansprüche 1 bis 3, welches Griffe (6, 6') aufweist, die flexibel oder fest mit dem Pflanztopf verbunden sind.

**5.** Pflanzgefäß gemäß Anspruch 4 , wobei die Griffe (6, 6') versenkt, umgeklappt oder eingesteckt werden können.

**6.** Pflanzgefäß gemäß einem oder mehreren der Ansprüche 1 bis 5, wobei der Pflanztopf Öffnungen (5) an der Seite (2) und/oder am Boden (1) aufweist.

**7.** Pflanzgefäß, welches einen Pflanztopf aufweist, wobei der Pflanztopf von innen mit mindestens einem Trageband (7) ausgelegt ist.

**8.** Pflanzgefäß gemäß einem oder mehreren der Ansprüche 1 bis 6, wobei der Pflanztopf von innen mit mindestens einem Trageband (7) ausgelegt ist.

**9.** Verfahren zum Umpflanzen von Pflanzen, unter Verwendung eines Pflanzgefäßes gemäß einem oder mehreren der Ansprüche 1 bis 8.

**10.** Verfahren gemäß Anspruch 9 , enthaltend die Schritte
a) Entnehmen der Pflanzen in einem Pflanzgefäß gemäß einem oder mehreren der Ansprüche 1 bis 8 aus einem Übertopf, und anschließend
b) Einsetzen der Pflanzen in einen neuen Übertopf.

**11.** Verfahren gemäß Anspruch 9 oder 10, enthaltend die Schritte
a) Entnehmen der Pflanzen in einem Pflanzgefäß gemäß einem oder mehreren der Ansprüche 1 bis 8 aus einem Übertopf,
b) Entnehmen der Pflanzen aus dem Pflanzgefäß, und anschließend
c) Einsetzen der Pflanzen.

**12.** Verfahren gemäß Anspruch 9, enthaltend die Schritte
a) Entnehmen der Pflanzen aus einem Pflanzgefäß gemäß einem oder mehreren der Ansprüche 1 bis 8, und anschließend
b) Einsetzen der Pflanzen.

**13.** Verfahren gemäß Anspruch 11 oder 12, worin die Pflanzen beim Einsetzen
i) in ein Pflanzgefäß gemäß einem oder mehreren der Ansprüche 1 bis 8 oder in ein handelsübliches Pflanzgefäß eingesetzt werden, und optional anschließend in einen Übertopf, oder
ii) direkt in die Erde eingesetzt werden.

**14.** Verwendung eines Pflanzgefäßes gemäß einem oder mehreren der Ansprüche 1 bis 8, zum Umpflanzen von Pflanzen.
